# EUROPÄISCHE PATENTSCHRIFT

(11) **EP 2 420 801 B1**
(45) Veröffentlichungstag und Bekanntmachung des Hinweises auf die Patenterteilung: **19.10.2016**
(21) Anmeldenummer: 11167676.3
(22) Anmeldetag: 26.05.2011
(51) Int. Cl.: G01D 4/00

(54) **Haushaltszählerschnittstellenvorrichtung**
Household meter interface device
Dispositif d'interface de compteur domestique

(30) Priorität: 17.08.2010 DE 102010034629
(43) Veröffentlichungstag der Anmeldung: 22.02.2012
(73) Patentinhaber: RWE Rheinland Westfalen Netz AG, 45128 Essen (DE)
(72) Erfinder: Kneitinger, Hans-Werner, 40882 Ratingen (DE)
(74) Vertreter: Cohausz & Florack

(56) Entgegenhaltungen:
- WO-A2-2008/033559
- GB-A- 2 460 517
- GB-A- 2 462 006
- US-A1- 2008 291 049
- US-A1- 2010 007 522
- US-A1- 2010 188 255

## Beschreibung

Der Gegenstand betrifft eine Haushaltszählerschnittstellenvorrichtung mit einem mit einer optischen Schnittstelle eines elektronischen Haushaltszählers mechanisch verbundenen optischen Transceiver, und einer optische Signale des Transceivers in elektrische Signale umsetzenden Umsetzeinrichtung. Darüber hinaus betrifft der Gegenstand ein System mit einem Haushaltszähler und einer solchen Haushaltszählerschnittstellenvorrichtung.

Aus der GB 2 462 006 A ist ein Lesegerät bekannt, welches als zwischengeschaltetes Gerät zwischen einer optischen Schnittstelle eines elektronischen Haushaltszählers und einem optischen Lesegerät eingesetzt werden kann. Dieses Lesegerät kann laufend Messwerte an ein entferntes Display übermitteln. Aus der GB 2 460 517 A ist ebenfalls ein optisches Lesegerät bekannt, welches an einer optischen Schnittstelle eines elektronischen Haushaltszählers befestigt wird. Auch dieses Lesegerät kann Messwerte an ein Display als auch über das Internet an eine Abrechnungszentrale übermitteln.

Im Bereich der Heimautomatisierung werden Sensoren und Aktoren eingesetzt, um elektrische Geräte zu steuern und Zustände zu überwachen. So kann z.B. ein elektrischer/elekronischer Haushaltszähler (eHz) als Sensor zum Messen von Verbrauchswerten und als Aktor z.B. zum Unterbrechen der Stromversogung (Breaker) eingesetzt werden. Elekronische Haushaltszähler (eHz) für das Messen von Energiemengen (Strom, Gas) werden politisch gefordert und gefördert. So soll in naher Zukunft eine Verpflichtung für Stromnetzbetreiber und Energieanbieter bestehen, zeitvariable Tarife anzubieten. Solche zeitvariablen Tarife erfordern jedoch eine Variabilität im Zähler selbst, um zu unterschiedlichen Zeiten unterschiedliche Tarifstrukturen abbilden zu können. Aus diesem Grunde werden elektronische Haushaltszähler notwendig.

Das Auslesen der elektronischen Haushaltszähler soll aus der Ferne erfolgen können. Hierzu ist es notwendig, die Messwerte der elektronischen Haushaltszähler, wie beispielsweise Zähleridentifikation, Zeitinformationen, als auch Zählerstände von der Ferne auslesen zu können. Ein Fernauslesen wird daher über eine entsprechende Steuereinrichtung, insbesondere einen sogenannten Multi Utility Communication Controller (MUC-C), ermöglicht. Der Begriff MUC-C wird nachfolgend stellvertretend für den Begriff Steuereinrichtung verwendet.

Bei bestehenden Lösungen können diese MUC-Cs die Messwerte der Haushaltszähler über optische Schnittstellen auslesen. Hierzu ist an den optischen Schnittstellen ein Kommunikationszusatzgerät angeschlossen, welches die Daten aus der optischen Schnittstelle des Haushaltszählers ausliest und seriell dem MUC-C zur Verfügung stellt.

Die Kommunikation zwischen der optischen Schnittstelle und dem MUC-C erfolgt hierbei über das bitserielle RS232-Protokoll. Dieses Protokoll erlaubt eine Eins-zu-Eins Kommunikation zwischen einem Haushaltszähler und einem MUC-C. Somit ist es notwendig, für jeden einzelnen Haushaltszähler einen geeigneten MUC-C zur Verfügung zu stellen. Die Kommunikation zwischen dem MUC-C und der optischen Schnittstelle des Haushaltszählers ist jedoch ungesichert und kann zum Einen abgehört werden und zum Anderen können Steuerbefehle in den Haushaltszähler eingespeist werden. Beides ist nicht erwünscht und sollte unterbunden werden können.

Aus diesem Grunde lag dem Gegenstand die Aufgabe zugrunde, elektronische Haushaltszähler kostengünstig und sicher fernauslesbar zu gestalten.

Diese Aufgabe wird durch eine Haushaltszählerschnittstellenvorrichtung gemäß Anspruch 1 gelöst.

Es ist erkannt worden, dass die Eins-zu-Eins Kommunikation zwischen dem MUC-C und dem elektronischen Haushaltszähler (vorzugsweise Stromzähler) über die RS232-Schnittstelle unzureichend ist. Diese Kommunikation ist kostenintensiv, da für jeden einzelnen Haushaltszähler ein MUC-C bereit gestellt werden muss. Eine Punkt-zu-Mehrpunkt Kommunikation zwischen einem einzigen MUC-C und mehreren elektronischen Haushaltszählern wird durch den Einsatz des Kommunikationsbusses und des Busprotokolls ermöglicht. Die Schnittstelleneinrichtung ermöglicht es nunmehr, auf einen Kommunikationsbus von einer Mehrzahl von elektronischen Haushaltszählern stammenden Daten (Messdaten, Identifikationsdaten, Zeitdaten) mit nur einem MUC-C auszutauschen. Die von der optischen Schnittstelle in dem Transceiver empfangenen optischen Signale werden gegenständlich in elektrische Signale in der Umsetzeinrichtung umgewandelt. Diese elektrischen Signale eignen sich zum Umwandeln in Signale, die einem Busprotokoll entsprechen. Es erfolgt in der Schnittstelleneinrichtung somit eine Umsetzung der Signale dergestalt, dass die Signale auf einem Kommunikationsbus ausgetauscht werden können. Zum Einsatz können beispielsweise verschiedene Busprotokolle kommen, wie zum Beispiel ARCNET, CSMA, TCP/IP und dergleichen.

Über den Kommunikationsbus können auch von einem MUC-C in einen bestimmten elektronischen Haushaltszähler Steuersignale eingespeist werden. Somit ist auch eine Fernkonfiguration der eHz über den Kommunikationsbus und den MUC-C möglich.

Die Schnittstelleneinrichtung, die Umsetzeinrichtung und/oder der Transceiver als auch die Haushaltszählerschnittstellenvorrichtung selber kann hierzu mittels einer ein-eindeutigen Kennzeichnung identifiziert werden. Somit ist es für einen MUC-C möglich, Steuer- und Stellbefehle an den elektronischen Haushaltszähler unter Verwendung der eindeutigen Kennung zu versenden. Somit können Steuer- und Stellbefehle für einzelne elektronische Haushaltszähler über den Kommunikationsbus mit einem MUC-C ausgetauscht werden.

Die optische Schnittstelle des elektronischen Haushaltszählers sendet permanent, vorzugsweise repetierend, je nach Einstellung, Messsignale aus. Um diese permanent in dem Transceiver empfangenen Signale für die Kommunikation auf dem Kommunikationsbus verwendbar zu machen, wird vorgeschlagen, dass die Umsetzeinrichtung und/oder die Schnittstelleneinrichtung einen Speicher zum Zwischenspeichern von über den Transceiver empfangenen Signalen enthält. Somit werden die Messwerte, die von der optischen Schnittstelle ausgegeben werden, zunächst zwischengespeichert und dann in das Busprotokoll umgewandelt. Je nach Verfügbarkeit des Kommunikationsbusses werden die Daten dann über den Kommunikationsbus ausgesendet.

Sensible Daten, wie z.B. Messwerte, als auch Steuerbefehle, wie z.B. Tarifdaten, können bei elektronischen Haushaltszählern über die sogenannte Messstellenbetreiber (MSB)-Schnittstelle ausgetauscht werden. Diese MSB-Schnittstelle ist in der Regel die genannte optische Schnittstelle. Um mit einer solchen MSB-Schnittstelle kommunizieren zu können, wird vorgeschlagen, dass der Transceiver zur Kommunikation mit der als, vorzugweise bitseriell ausgelegten, Messstellenbetreiber-Schnittstelle gebildeten optischen Schnittstelle gebildet ist. Der Transceiver kann so geformt sein, dass er Sende- und Empfangsdioden aufweist, die vorzugsweise einen Abstand von 6,5mm haben und somit kongruent zu den Sende- und Empfangsdioden in dem elektronischen Haushaltszähler sind.

Auf der Rückseite des elektronischen Haushaltszählers kann die Haushaltszählerschnittstellenvorrichtung angebracht werden. Hierzu wird die Haushaltszählerschnittstellenvorrichtung bevorzugt formschlüssig an dem Haushaltszähler im Bereich der optischen Schnittstelle angebracht. Der Transceiver kann nun mit der optischen Schnittstelle des Haushaltszählers kommunizieren. Sende- und Empfangsdioden können vorgesehen sein, mit deren Hilfe die optische Kommunikation zwischen Transceiver und optischer Schnittstelle ermöglicht ist.

Wie eingangs bereits erläutert, können Kostenvorteile dadurch erreicht werden, dass mehrere elektronische Haushaltszähler über einen einzigen Multi Utility Communication Controller MUC-C kommunizieren. Aus diesem Grunde wird vorgeschlagen, dass die Schnittstelleneinrichtung zur Kommunikation mit einem Multi Utility Communication Controller (MUC-C) über den Kommunikationsbus eingerichtet ist. Sowohl der Multi Utility Communication Controller als auch die Schnittstelleneinrichtung sind so ausgelegt, dass Signale von und zu dem Kommunikationsbus übertragen werden können.

Bei bestehenden Lösungen, bei denen der MUC-C über die RS232-Schnittstelle mit dem elektronischen Haushaltszähler kommuniziert, ist eine Energieversorgung nicht notwendig, da diese über die RS232-Schnittstelle selbst gewährleistet wird. Durch die Verwendung von Transceiver, Umsetzeinrichtung und Schnittstelleneinrichtung ist jedoch der Energieverbrauch erhöht, so dass eine zusätzliche Energieversorgung notwendig ist. Aus diesem Grunde wird vorgeschlagen, dass eine Spannungsversorgung der Haushaltszählerschnittstellenvorrichtung durch eine Energieversorgung erfolgt. Diese kann unabhängig vom Kommunikationsbus sein. Auch kann diese durch Kabel des Kommunikationsbusses gewährleistet werden. So ist es z.B möglich, über die Kabel des Kommunikationsbusses die Stromversorgung bereit zu stellen. Auch können zusätzliche Litzen im Kabel des Kommunikationsbusses für die Energieversorgung genutzt werden.

Um die Kommunikation zwischen MUC-C und elektronischem Haushaltszähler gegen Manipulation zu sichern, wird vorgeschlagen, dass in der Schnittstelleneinrichtung Verschlüsselungsmittel zum Ver- und Entschlüsseln der über den Kommunikationsbus übertragenen Signale vorgesehen sind. Eine Verschlüsselung kann dabei mittels symmetrischer oder asymmetrischer Verschlüsselungsverfahren erfolgen. In diesem Zusammenhang kann vor einer Kommunikation bzw. beim Einrichten einer Verbindung zwischen einem Haushaltszähler und einem MUC-C ein Schlüsselaustausch erfolgen, dergestalt, dass die Geräte ihre öffentlichen Schlüssel miteinander Austauschen und die übertragenen Signale dann mit diesem öffentlichen Schlüsseln verschlüsselt werden und in Geräten mit Hilfe von entsprechenden privaten Schlüsseln entschlüsselt werden.

Besonders kostengünstig ist die Kommunikation, wenn diese, wie vorgeschlagen wird, bei einem drahtgebundenen Kommunikationsbus erfolgt. In diesem Fall entfallen teure Funkschips, die ansonsten zum Einsatz kommen müssten.

Eine besonders kleinbauende Haushaltszählerschnittstellenvorrichtung lässt sich dadurch realisieren, dass zumindest der Transceiver, die Umsetzeinrichtung und die Schnittstelleneinrichtung in einem von dem Haushaltszähler getrennten Gehäuse gekapselt sind. Dieses getrennte Gehäuse kann dann in einer entsprechenden Aufnahme des Haushaltszählers, insbesondere im Bereich der MSB-Schnittstelle, eingesetzt werden.

Ein weiterer Gegenstand ist ein System mit einem elektronischen Haushaltszähler, einer Haushaltszählerschnittstellenvorrichtung nach Anspruch 1, sowie einem Multi Utility Communication Controller, wobei ein Kommunikationsausgang des Multi Utility Communication Controllers über eine weitere Schnittstelleneinrichtung mit dem Kommunikationsbus verbunden ist.

In diesem Zusammenhang wird auch vorgeschlagen, dass die weitere Schnittstelleneinrichtung zur Protokollumsetzung von einem bitseriellen Protokoll des Kommunikationsausgangs in das Busprotokoll des Kommunikationsbusses gebildet ist. Das bitserielle Protokoll kann dabei vorzugsweise ein Protokoll nach dem RS232-Standard sein. Das Busprotokoll ist entsprechend dem Busprotokoll der Schnittstelleneinrichtung der Haushaltszählerschnittstellenvorrichtung. Hier kann beispielsweise auch ein RS485-Protokoll zum Einsatz kommen.

Nach einem vorteilhaften Ausführungsbeispiel wird vorgeschlagen, dass die weitere Schnittstelleneinrichtung zur Kommunikation mit einer bitseriellen des Multi Utility Communication Controllers gebildet ist. Dies ermöglicht die standardkonforme Kommunikation mit dem MUC-C.

Die zuvor genannten Verfahren können auch als Computerprogramm oder als auf einem Speichermedium gespeichertes Computerprogramm realisiert werden. Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: eine schematische Ansicht einer Haushaltszählerschnittstellenvorrichtung nach einem Ausführungsbeispiel;
- Fig.2: eine an einen elektronischen Haushaltszähler angekoppelte Haushaltszählerschnittstellenvorrichtung;
- Fig. 3: eine schematische Ansicht eines Multi Utility Communication Controllers;
- Fig. 4: eine schematische Ansicht eines Systems nach einem Ausführungsbeispiel.

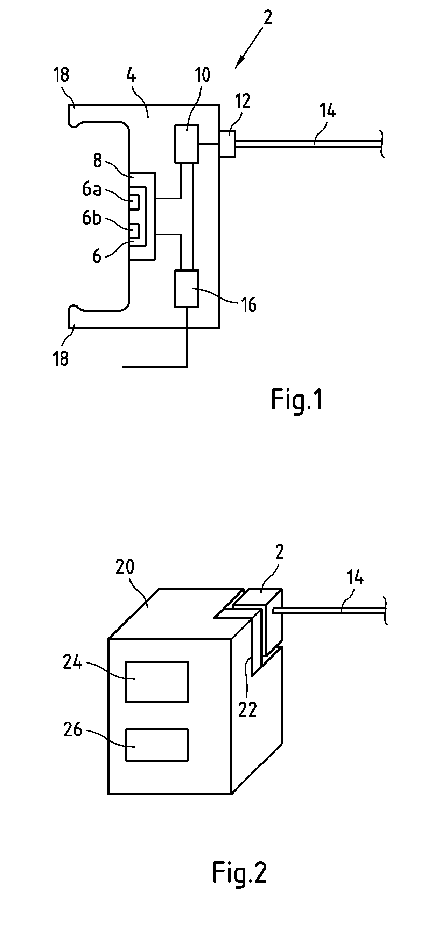

Fig. 1 zeigt eine Haushaltszählerschnittstellenvorrichtung 2 mit einem Gehäuse 4. Schematische angedeutet ist in dem Gehäuse 4 der Transceiver 6. An dem Transceiver 6 ist die Umsetzeinrichtung 8 angeordnet. In Wirkverbindung mit der Umsetzeinrichtung 8 ist die Schnittstelleneinrichtung 10. Ferner ist ein Anschluss 12 vorgesehen, über den ein Kabel 14 eines Kommunikationsbusses angeschlossen werden kann. Schließlich ist eine Spannungsversorgung 16 gezeigt, über die Transceiver 6, Umsetzeinrichtung 8 als auch Schnittstelleneinrichtung 10 mit elektrischer Energie gespeist werden.

In dem Transceiver 6 sind eine Sendediode 6a und eine Empfangsdiode 6b angeordnet. Der Abstand der Sendediode 6a von der Empfangsdiode 6b entspricht dem Abstand der entsprechenden Dioden in der optischen Schnittstelle des elektronischen Haushaltszählers.

Mittels an dem Gehäuse 4 angeordneten Greifarmen 18a, b kann die Haushaltszählerschnittstellenvorrichtung 2 mit einem elektronischen Haushaltszähler mechanisch verbunden werden. Hierzu können die Greifarme 18 beispielsweise entsprechenden Hinterschnitte am eHz hintergreifen. Somit ist eine formschlüssige Verbindung zwischen Haushaltszählerschnittstellenvorrichtung 2 und nicht gezeigten Haushaltszähler möglich. In einer solchen Positionierung liegen die Sende- und Empfangsdioden der 6a und 6b unmittelbar an den Sende- und Empfangsdioden optischen Schnittstelle des Haushaltszählers gegenüber. Eine Kommunikation mit dem Haushaltszähler ist somit galvanisch entkoppelt möglich.

Die von der Sende- und Empfangsdiode 6a, b empfangenen Signale werden in der Umsetzeinrichtung 8 in elektrische Signale umgesetzt und an die Schnittstelleneinrichtung 10 weitergeleitet.

In der Schnittstelleneinrichtung 10 erfolgt eine Umsetzung der Signale so, dass diese einem Busprotokoll gehorchend auf den Kommunikationsbus über das Kabel 14 aufgelegt werden können. Eine Verschlüsselung kann in der Schnittstelleneinrichtung 10 erfolgen. Diese Verschlüsselung kann beispielsweise mit Hilfe eines gespeicherten öffentlichen Schlüssels eines MUC-C erfolgen. Andere Verschlüsselungsmethoden als auch Signaturmethoden sind denkbar und im Bereich dieser Anmeldung.

Das Kabel 14 ist in den Anschluss 12 vorzugsweise über einen RJ-45 Stecker eingesteckt und ermöglicht eine Kommunikation der Schnittstelleneinrichtung 10 mit dem Kommunikationsbus.

An dem Kabel 14 können mehrere Haushaltszählerschnittstellenvorrichtungen 2 als auch ein MUC-C angeordnet sein.

Fig. 2 zeigt einen elektronischen Haushaltszähler 20. Zu erkennen ist, dass auf der Vorderseite des elektronischen Haushaltszählers 20 ein Display 24 zum unmittelbaren Ablesen von Zählerständen angeordnet ist. Ferner ist ein Bedienfeld 26 vorgesehen mit Hilfe dessen der elektronische Haushaltszähler 20 manuell gesteuert werden kann.

Auf der Rückseite des elektronischen Haushaltszählers 20 befindet sich dessen optische Schnittstelle 22, welche als MSB-Schnittstelle ausgebildet ist. Im Bereich der optischen Schnittstelle 22 ist eine Nische im Gehäuse des elektronischen Haushaltszählers 20 vorgesehen. In dieser Nische wird die Haushaltszählerschnittstellenvorrichtung 2 eingesetzt und dort verrastet. Im eingesetzten und verrasteten Zustand liegen die Sende- und Empfangsdioden 6a und 6b an den entsprechenden Sende- und Empfangsdioden der optischen Schnittstelle 22 an und eine galvanisch entkoppelte Kommunikation zwischen der Haushaltszählerschnittstellenvorrichtung 2 und dem elektronischen Haushaltszähler 20 ist möglich.

Über das Kabel 14 ist es nun möglich, Zählerstände von dem elektronischen Haushaltszähler 20 auszulesen als auch Steuerbefehle an den elektronischen Haushaltszähler 20 zu übertragen.

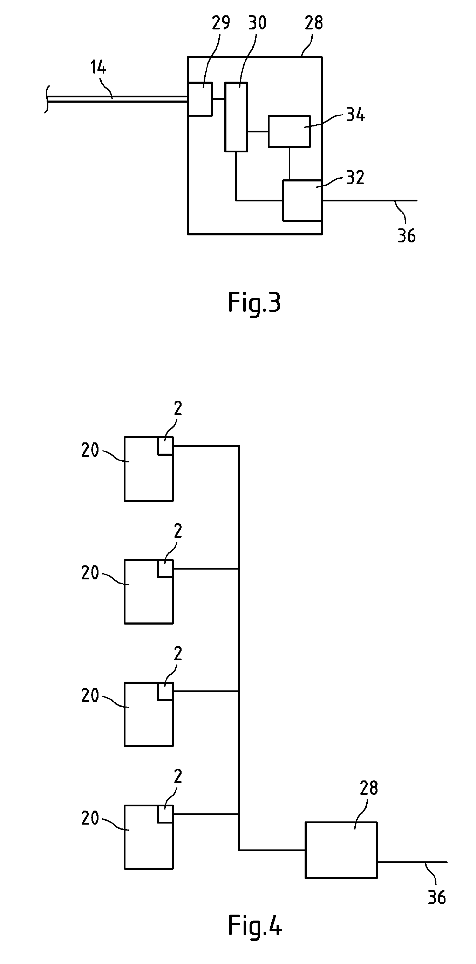

Fig. 3 zeigt schematisch einen Multi Utility Communication Controller 28. Der MUC-C 28 ist ebenfalls mit dem Kabel 14 über eine RJ45-Steckverbindung 29 verbunden. Eine weitere Schnittstelleneinrichtung 30 ist vorgesehen, mit deren Hilfe die in dem Busprotokoll auf dem Kabel 14 vorliegenden Signale empfangen werden können und dem Busprotokoll entsprechende Signale über das Kabel 14 auf dem Kommunikationsbus 14 gegeben werden können.

Ein Mikrocontroller 34 ist in dem MUC-C 28 vorgesehen, der sowohl die Schnittstelleneinrichtung 30 als auch einen Ausgang 32 ansteuert. Über den Ausgang 32 können die Messwerte, die über das Kabel 14 empfangen wurden, in ein Weitverkehrsnetz 36 gespeist werden und somit einem Energieversorger zum Fernauslesen zur Verfügung gestellt werden. Auch kann der Energieversorger über das Weitverkehrsnetz 36 Steuerbefehle in dem MUC-C 28 leiten, mit deren Hilfe eine Ansteuerung und Parametrierung als auch Regelung des elektronischen Haushaltszählers 2 möglich ist. In diesem Fall werden die Regel- und Steuerbefehle ebenfalls mit Hilfe der weiteren Schnittstelleneinrichtung 30 auf den Kommunikationsbus gegeben und von dem adressierten elektronischen Haushaltszähler empfangen und umgesetzt.

Fig. 4 zeigt ein System, bei dem eine Mehrzahl von elektronischen Haushaltszählern 20 jeweils mechanisch mit einer Haushaltszählerschnittstellenvorrichtungen 2 gekoppelt sind. Die Haushaltszählerschnittstellenvorrichtungen 2 sind über ein gemeinsames Kabel 14 miteinander und mit einem MUC-C 28 verbunden. Somit ist es möglich, dass über den MUC-C 28 Messwerte von mehreren elektronischen Haushaltszählern 20 ausgelesen werden können, als auch mehrere elektronische Haushaltszähler 20 angesteuert werden können. Der MUC-C 28 ist seinerseits an das Weitverkehrsnetz 36 angeschlossen, worüber eine Kommunikation mit einem Energieversorger möglich ist.

## Patentansprüche

1. Haushaltszählerschnittstellenvorrichtung mit
- einem mit einer optischen Schnittstelle (22) eines elektronischen Haushaltszählers (20) mechanisch verbundenen optischen Transceiver (6), und
- einer optische Signale des Transceivers (6) in elektrische Signale umsetzenden Umsetzeinrichtung (8), **dadurch gekennzeichnet,**
- **dass** eine Schnittstelleneinrichtung (10) die von der Umsetzeinrichtung (8) empfangenen Signale in ein Busprotokoll umsetzt und auf einen Kommunikationsbus (14) aussendet sowie von dem Kommunikationsbus (14) empfangene Signale in Signale für die Umsetzeinrichtung (8) und/oder den Transceiver (6) umsetzt, derart, dass die Schnittstelleneinrichtung (10) zur Punkt-zu-Mehrpunkt Kommunikation zwischen einer einzigen Steuereinrichtung (28) und mehreren Haushaltszählern über den Kommunikationsbus (14) eingerichtet ist.

2. Haushaltszählerschnittstellenvorrichtung nach Anspruch 1, **dadurch gekennzeichnet, dass** die Umsetzeinrichtung (8) und/oder die Schnittstelleneinrichtung (10) einen Speicher zum Zwischenspeichern von über den Transceiver (6) empfangenen Signalen enthält.

3. Haushaltszählerschnittstellenvorrichtung nach Anspruch 1 oder 2, **dadurch gekennzeichnet, dass** der Transceiver (6) zur Kommunikation mit der als, vorzugsweise bitseriell ausgelegten, Messstellenbetreiber-Schnittstelle gebildeten optischen Schnittstelle (22) gebildet ist.

4. Haushaltszählerschnittstellenvorrichtung nach einem der Ansprüche 1 bis3, **dadurch gekennzeichnet, dass** in der Schnittstelleneinrichtung (10) Verschlüsselungsmittel zum Ver- und Entschlüsseln der über den Kommunikationsbus (14) übertragenen Signale vorgesehen ist.

5. Haushaltszählerschnittstellenvorrichtung nach einem der Ansprüche 1 bis 4, **dadurch gekennzeichnet, dass** die Schnittstelleneinrichtung (10) zur drahtgebundenen Kommunikation mit dem Kommunikationsbus (14) gebildet ist.

6. Haushaltszählerschnittstellenvorrichtung nach einem der Ansprüche 1 bis 5, **dadurch gekennzeichnet, dass** zumindest der Transceiver (6), die Umsetzeinrichtung (8) und die Schnittstelleneinrichtung (10) in einem von dem Haushaltszähler (20) getrennten Gehäuse (4) gekapselt sind.

7. System mit einem elektronischen Haushaltszähler (20), einer Haushaltszählerschnittstellenvorrichtung (2) nach Anspruch 1, wobei ein Kommunikationsausgang der Steuereinrichtung (28) über eine weitere Schnittstelleneinrichtung (30) mit dem Kommunikationsbus verbunden ist.

8. System nach Anspruch 7, **dadurch gekennzeichnet, dass** die weitere Schnittstelleneinrichtung (30) zur Protokollumsetzung von einem bitseriellen Protokoll des Kommunikationsausgangs in das Busprotokoll des Kommunikationsbusses (14) gebildet ist.

9. System nach Anspruch 8, **dadurch gekennzeichnet, dass** die weitere Schnittstelleneinrichtung (30) zur Kommunikation mit einer bitserielle Schnittstelle der Steuereinrichtung (28) gebildet ist.

## Claims

1. Household meter interface device with
- an optical transceiver (6) mechanically connected to an optical interface (22) of an electronic household meter (20) and
- a transfer device (8), transferring optical signals of the transceiver (6) into electrical signals
**characterised in that**
- an interface device (10) transfers the signals received by the transfer device (8) into a bus protocol and sends it via a communication bus (14) and also transfers the signals received from the communication bus (14) into signals for the transfer device (8) and/or the transceiver (6) in such a way that the interface device (10) is designed for point to multi-point communication between a single control device (28) and a plurality of household meters via the communication bus (14).

2. Household meter interface device according to Claim 1, **characterised in that** the transfer device (8) and/or the interface device (10) includes a memory to buffer the signals received via the transceiver (6).

3. Household meter interface device according to Claim 1 or 2, **characterised in that** the transceiver (6) is formed for communication with the optical interface (22), which is formed as meter operator interface and is preferably bit-serial designed.

4. Household meter interface device according to any one of Claims 1 to 3, **characterised in that** the means of encryption means for encrypting and decrypting the signals transferred via the communication bus (14) are included in the interface device (10).

5. Household meter interface device according to any one of Claims 1 to 4, **characterised in that** the interface device (10) is formed for wired-based communication with the communication bus (14).

6. Household meter interface device according to any one of Claims 1 to 5, **characterised in that** at least the transceiver (6), the transfer device (8) and the interface device (10) are encased in housing (4), which is separate from the household meter (20).

7. System with an electronic household meter (20), a household meter interface device (2) according to Claim 1, wherein a communication output of the control device (28) is connected to the communication bus via a further interface device (30).

8. System according to Claim 7, **characterised in that** the further interface device (30) is formed for mapping a bit-serial protocol of the communication output into the bus protocol of the communication bus (14).

9. System according to Claim 8, **characterised in that** the further interface device (30) is formed for communication with a bit-serial interface of the control device (28).

## Revendications

1. Dispositif d'interface de compteur domestique, avec
- un émetteur - récepteur (6) optique, relié mécaniquement à une interface optique (22) d'un compteur domestique (20) électronique, et
- un dispositif de conversion (8) convertissant des signaux optiques de l'émetteur - récepteur (6) en signaux électriques
**caractérisé en ce que**
un dispositif d'interface (10), qui convertit des signaux reçus du dispositif de conversion (8) en un protocole de bus et les émet sur un bus de communication (14), ainsi que des signaux, reçus par le bus de communication (14), en signaux pour le dispositif de conversion (8) et / ou l'émetteur - récepteur (6), de telle manière que le dispositif d'interface (10) est aménagé pour une communication point à multipoint entre un dispositif de commande (28) unique et plusieurs compteurs domestiques par l'intermédiaire du bus de communication (14).

2. Dispositif d'interface de compteur domestique selon la revendication 1,
**caractérisé en ce que** l'émetteur - récepteur (6) et / ou le dispositif d'interface (10) comprennent une mémoire pour la mémorisation intermédiaire de signaux reçus par l'intermédiaire de l'émetteur - récepteur (6).

3. Dispositif d'interface de compteur domestique selon revendication 1 ou 2,
**caractérisé en ce que** l'émetteur - récepteur (6) est conçu pour la communication avec l'interface optique (22), réalisée en tant qu'interface de fonctionnement d'un point de mesure, de préférence en série par bit.

4. Dispositif d'interface de compteur domestique selon l'une des revendications 1 à 3,
**caractérisé en ce que**, dans le dispositif d'interface (10), est prévu un moyen de codage pour le codage et le décodage des signaux reçus par l'intermédiaire du bus de communication (14).

5. Dispositif d'interface de compteur domestique selon l'une des revendications 1 à 4,
**caractérisé en ce que** le dispositif d'interface (10) est conçu pour la communication câblée avec le bus de communication (14).

6. Dispositif d'interface de compteur domestique selon l'une des revendications 1 à 5,
**caractérisé en ce qu**'au moins l'émetteur - récepteur (6), le dispositif de conversion (8) et le dispositif d'interface (10) sont capsulés dans un boîtier (4) séparé du compteur domestique (20).

7. Système comprenant un compteur domestique (20) électronique, un dispositif d'interface de compteur domestique (2) selon la revendication 1, sachant qu'une sortie de communication du dispositif de commande (28) est reliée au bus de communication par l'intermédiaire d'un dispositif d'interface supplémentaire (30).

8. Système selon la revendication 7,
**caractérisé en ce que** le dispositif d'interface supplémentaire (30) est réalisé pour la conversion d'un protocole en série par bit de la sortie de communication en protocole de bus du bus de communication (14) .

9. Système selon la revendication 8,
**caractérisé en ce que** le dispositif d'interface supplémentaire (30) est réalisé pour la communication avec une interface en série par bit du dispositif de commande (28).
